(19) **Europäisches Patentamt**
**European Patent Office**
**Office européen des brevets**

(11) **EP 3 827 219 B1**

(12) # EUROPEAN PATENT SPECIFICATION

(45) Date of publication and mention
of the grant of the patent:
**30.08.2023  Bulletin 2023/35**

(21) Application number: **19773507.9**

(22) Date of filing: **19.07.2019**

(51) International Patent Classification (IPC):
**G01B 21/04** *(2006.01)*      **G01B 5/00** *(2006.01)*
**G01B 11/00** *(2006.01)*

(52) Cooperative Patent Classification (CPC):
**G01B 5/0004; G01B 21/047;** G01B 5/008;
G01B 11/005

(86) International application number:
**PCT/IB2019/056205**

(87) International publication number:
**WO 2020/021417 (30.01.2020 Gazette 2020/05)**

(54) **ACCESSORY FOR ROTARY PROBE SUPPORT**

ZUBEHÖR FÜR DREHSONDENTRÄGER

ACCESSOIRE POUR SUPPORT DE SONDE ROTATIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **26.07.2018  CH 9252018**

(43) Date of publication of application:
**02.06.2021  Bulletin 2021/22**

(73) Proprietor: **TESA Sàrl**
**1020 Renens (CH)**

(72) Inventors:
- **CHARDONNENS, Julien**
**1630 Bulle (CH)**
- **SCHNEEBERGER, Patrick**
**1868 Collombey (CH)**

(74) Representative: **P&TS SA (AG, Ltd.)**
**Avenue J.-J. Rousseau 4**
**P.O. Box 2848**
**2001 Neuchâtel (CH)**

(56) References cited:
**US-A- 370 734    US-A- 5 101 548**

EP 3 827 219 B1

## Description

Field of the invention

The present invention concerns a rotatable support for rotatably supporting a probe, as well as an accessory and a method for rotating the probe support by a desired angle. Importantly, but not exclusively, the invention is embodied by a non-motorized, reorientable, and indexable support for mounting a probe to a coordinate measuring machine (CMM). In the context of this invention the term "probe" denotes any device capable of reading a coordinate on the surface of a workpiece, or any characteristics of a workpiece like finish status, temperature or composition. The invention is especially suited to the measurement of surface characteristics, but may also be applied to the detection of internal flaws or features, for example by non-invasive ultrasound or Focault current analysis.

The probe support is configured to rotatably support a surface-sensing device for use in several apparatuses, such as the mentioned Coordinate machine, a scanning machine, a machine tool, an inspection/measurement robot, or any other suitable apparatus. Surface-sensing devices can be used to measure the coordinates of points on the surface of a workpiece or to measure other features of the surface, such as roughness, hardness or material defects.

Description of related art

Coordinate-measuring machines (CMM for brevity) are known and used in the art of dimensional metrology. In many cases the CMM comprise a reference surface, for example a rectified granite plane, on which the workpieces to be measured can be placed, and a moveable support that can be precisely positioned in the three coordinates XYZ by a suitable assembly of actuators and encoders. A surface-sensing probe mounted on the moveable support provides the position or other information relative to the surface of the workpiece.

It is known to mount the probes on the moveable support of the CMM by means of a two-axis probe head which is rotatable about two mutually perpendicular axes relative to a fixed structure as described, among others, in EP2889573A1. The probe head positions the probe at the appropriate angular orientation with respect to the surface to be measured.

A coordinate probe mounted on a CMM could be a simple touch trigger probe, which determines the instant in time of the contact, as described, for example in EP1610087, which in turn allows to determine the position of the contacted point from the XYZ coordinates of the CMM and the probe orientation. Some touch probes are multi-dimensional probes responding to 3D deflections that can sense a workpiece in multiple directions; other contact probes are unidirectional, however, or are optimized to respond to deflection along a preferred direction.

Non-contact probes, such as optical probes of interferometric, confocal, or any other type, and ultrasonic sensors are often one-directional probes: they can sense a surface along one direction, often determined by an axis of the emitted beam. Scanning laser probes, which scan a surface to determine coordinate points by triangulation, also have a preferred measuring direction.

Two-axis probe heads, as described above, do not have sufficient degrees of freedom to orient a probe in a suitable way to measure complex features of a workpiece, especially when the probe is uncapable to provide multi-dimensional measures (e.g. one-directional probes). For example, measuring the diameter of a borehole requires insertion of the probe into the hole and a subsequent rotation around the probe longitudinal axis to sense the sides of the hole. One-directional probes generally require a rotary element to provide a third axis of rotation for greater versatility in measuring workpieces.

Coordinate measuring systems having a rotating adapter for measuring probes are known in the art: EP2384851 discloses a CMM comprising a moveable support and a modular rotational fitting, comprising an actuator, arranged to interoperate between such moveable support and a probe connector. This modular rotational fitting comprises a plurality of electrical and optical signal connections and an actuator to turn the rotation fitting up to a predefined angle. Such motorized rotary fittings are costly, heavy, and complicated to construct and operate. In addition, they consume electrical energy and contribute to heating of the probe.

Non-motorized rotating adapters are also known in the art: DE10260670B4 describes a method of rotating an optical line sensor that is mounted on a two-axis probe head with a rotary adapter by holding the sensor in a fixture and moving the CMM arm in a circular movement centered on the axis of the rotary adapter until the desired angular orientation is reached. WO2008/029094 describes a passive rotary adapter which allows the surface sensing probe to which it is attached to be rotated by means of one of the two actuators of the probe head while the probe is held in a fixed position. These methods of rotation are not suitable, however, for indexed rotary fittings, which have discrete and repeatable angular positions as determined by a latching mechanism such as gears or balls and recesses.

The method described in WO2009/109764 consists of disconnecting the surface sensing device from its support, preferably into a holder, rotating the support member and then reconnecting the device in the new orientation. However, the repeated disconnections and reconnections of the device during the measurement process are time-consuming and would require recalibration if precise positioning is required.

WO2015/155209 describes an indexed rotary adapter integrated into the probe, which must be rotated manually.

US5,101,548 describes an apparatus for changing a sensing device in a positioning machine.

## Brief summary of the invention

The aim of the present invention is to eliminate or at least mitigate some the above shortcomings of the prior art.

According to the invention, this aim is achieved by means of the accessory of claim 1, the metrological set of claim 11 and the method of claim 15.

This solution provides rotation of a probe support mounted on a position determining apparatus and supporting a probe by means of an external accessory (i.e. an accessory being not part of the probe or the probe support, that is disconnected from the probe or probe support during surface sensing), in a semi- or fully-automated fashion, without requiring a disconnection of the probe from the probe support. The probe support can also be rotated manually if desired.

Moreover, this solution permits to replace a motorized probe support with a passive, indexable probe support. This replacement is not only advantageous in making and in operating the probe support, but also provides a more precise angular positioning of the probe due to a reduction of thermal expansions caused by motors and of deflections due the weight of the support.

In particular, this solution provides a cost-effective, less-bulky third rotational axis to motorized two-axis probe heads, notably for supporting a one-directional probe for through-hole measurements on workpieces.

## Brief Description of the Drawings

The invention will be better understood with the aid of the description of an embodiment given by way of example and illustrated by the figures, in which:

> Fig. 1 shows a position determining apparatus with a probe support rotatably supporting an optical line sensor and an accessory in the form of a station for rotating the probe support;
> Figs. 2-5 show details and a sectional view of the probe support of Fig.1;
> Figs.6-9 show details and sectional views of the accessory for rotating the probe support of Fig.1;
> Fig.10 shows an alignment of the probe connector with the station for providing a rotation of the probe support.

## Detailed Description of possible embodiments of the Invention.

The present invention concerns an accessory, a set and a method for rotating a probe support arranged to interoperate between a position determining apparatus and a probe for providing a rotational support to the probe with respect to the apparatus. Advantageously, the probe support can be arranged to interoperate between a moveable support of the position determining apparatus and a probe connector of the probe, wherein the moveable support provides a precisely positioned in a three coordinates system by a suitable assembly of actuators and encoders.

According to the invention, "probe support" designates any structure configured to be mounted on a position determining apparatus (notably on a mobile platform thereof) and configured to provide a rotatable support to a probe. The position determining apparatus can be a dimensional metrology machine such as the mentioned Coordinate machine, but also a scanning machine, a machine tool, an inspection/measurement robot, or any other suitable (dimensional metrology, inspection and/or measure) apparatus

The probe support provides a rotatable support to a probe by means of:

- a first member (stationary member) mounted or mountable on the position determining apparatus (notably on a mobile platform thereof), eventually by means of a (modular or detachable) rotating joint, and
- a second member (rotating member) rotatably coupled with the first member, the second member supporting or being configured to support the probe, eventually by means of a (modular or detachable) connection element, for operationally connecting the probe to the position determining apparatus.

The probe support can comprise one or more electrical and optical signal connections for supplying power to the probe and/or exchanging of signals between the probe and the position determining apparatus.

The probe support can be integrated in the position determining apparatus. The first member of the probe support can thus be part (e.g. share components) of the position determining apparatus, notably of the moveable support thereof.

Alternatively, the probe support can be integrated in the probe. The second member of the probe support can thus be part (e.g. share components) of the probe, notably of a body of the probe.

Alternatively, the probe support may consist in or be part of a standalone probe support or a probe support module of the position determining apparatus, such as a rotating adapter or a rotational fitting. Advantageously, the standalone probe support or a probe support module can comprise a first connector for a connection with the (mobile platform of) the position determining apparatus and a second connector for connecting the probe via a connector thereof. This solution permits a detachment and/or a replacement of the probe support without any structural modification of the position determining apparatus or of the probe.

Advantageously, the probe support can be part or integrated in a single-axis or multi-axis rotating joint (e.g. single-axis or multi-axis probe head), i.e. a rotating joint providing a rotation of the connected probe about one or a plurality of (preferably mutually perpendicular) axes relative to a fixed structure being connected or connectable to the position determining apparatus. The single-axis or multi-axis rotating joint can be integrated in the position determining apparatus or be a standalone module. Advantageously, the multi-axis rotating joint can be a two-axis rotating joint (e.g. two-axis probe head) providing a rotation of a connected probe about two mutually perpendicular axes relative to a fixed structure being connected or connectable to the position determining apparatus. This particular solution provides an additional rotational degree to the single-axis or multi-axis rotating joint without requiring additional (costly, heavy and heating) actuators or rotational mechanism.

Advantageously, the probe support is a passive probe support. The passive probe support is a non-motorized rotating support, i.e. the passive probe support must be rotated manually and/or by means of an external accessory. In fact, the probe support comprises neither an actuator nor a mechanism actuated by an actuator for rotating (orienting) the second member with respect to the first member.

Advantageously, the probe support is indexable, i.e. the probe support is configured to permit a relative rotation between the first and the second member to one of a plurality of (known) discrete rotational positions. The discrete and repeatable angular positions are typically provided by a latching mechanism, notably comprising cooperating latching elements such as gears, balls, pins and/or and recesses.

According to the invention, the probe may be any surface-sensing device configured to sense a surface of an object (e.g. workpiece) so as to provide a coordinate of a point on the sensed surface (according to a coordinate system) and/or a measure of a physical feature of the sensed surface. The physical feature of the sensed surface can be a roughness, a hardness or a non-conformity of a material of the object (e.g. defect).

The probe can be for example a touch probe configured to provide a coordinate (typically by determining the instant in time of the contact) or a measure by touching a portion of the surface of the object.

The probe can also be an optical probe, for example an interferometric or a confocal optical probe or a laser scanner, capable of providing a coordinate or a measure without touching the surface of the object, notably by emitting and receiving light rays. The optical probe can be configured to provide a coordinate by triangulation, such as scanning laser probes.

In a further variant, the probe can be multi-dimensional, i.e. capable to sense a surface along a plurality of distinct directions (preferably along a plurality of perpendicular directions) with respect to a body of the probe.

In yet another variant, the probe may be a one-directional probe, i.e. a probe configured to sense a surface along one direction (or along directions within a cone having an angle of less than 90°) with respect to a body of the probe. A typical example of a one-directional probe is a line optical sensor, i.e. an optical probe capable to sense a surface of the object along converging directions forming a line.

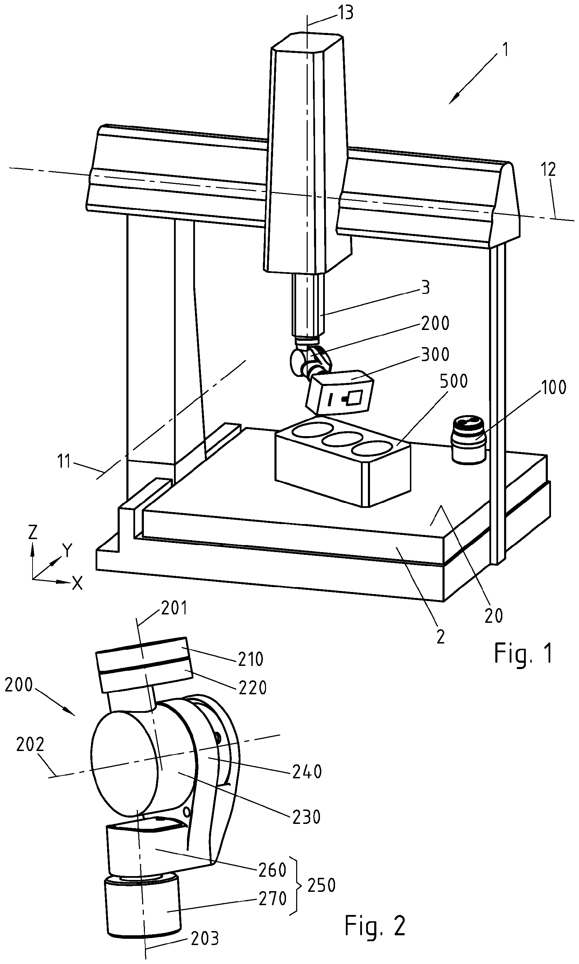

In the exemplary embodiment of Fig. 1, the probe support 250 is inserted between the mobile platform 3 of the coordinate measuring machine (CMM) 1 and the surface sensing probe 300, in this case a one-directional optical probe 300 (cf. Fig. 2). In the example shown, the probe support 250 is part (integrated) of a multi-axis rotating joint 200 equipping a bridge-type coordinate measuring machine (bridge-type CMM) 1.

The multi-axis rotating joint 200 is attached to the mobile platform 3 of the CMM 1 being translatable along a plurality of perpendicular axes 11, 12, 13 to provide a rotatory support to the one-directional optical probe 300 along a plurality of axes.

According to the invention, the position determining apparatus can be any coordinate measuring machine (e.g. articulated arm-, bridge-, or gantry-based CMM), a scanning machine, a machine tool or an inspection/measurement robot. The mobile platform 3 can thus be an articulated arm providing one or more rotational degree, a movable arm translatable along one or more (preferably perpendicular) axes or a mobile element providing a combination of translations and rotations along/around a plurality of axes. As depicted, the mobile platform 3 could be embodied by the quill, or Z-axis, of the CMM.

As illustrated in Figure 2, the multi-axis rotating joint 200 provides a first, a second, and a third rotational axis 201, 202, 203 to the (optical) probe 300. Preferably, the first rotational axis 201 is orthogonal to the second one 202. Preferably, the third rotational axis 203 is orthogonal to the second one 202.

The first and the second rotational axis 201, 202 are provided by a first and a second rotating connection (joint) 210, 220, 230, 240, while the third axis 203 is provided by the probe support 250.

The first rotating connection 210, 220 comprises a first member 210 mounted or mountable on (a distal portion of) the mobile platform 3 of the position determining apparatus 1. The second member 220 of the first rotating connection is rotatably coupled with the first member 210 and configured to support the second rotating connection 230, 240. This first rotating connection provides thus a rotation of the second rotating connection around the first rotational axis 201.

The second rotating connection 230, 240 comprises a first member 230 attached to (a distal portion of) the second member 220 of the first rotating connection. The second member 240 of the second rotating connection is rotatably coupled with the first member 230 and configured to support the probe support 250 to provide a rotation of the probe around the second rotational axis 202.

The stationary member 260 of the probe support 250 is attached to the second member 240 of the second rotating connection. The rotating member 270 of the probe support 250 is configured to support the probe 300 and is rotatably attached to the stationary member 260 to provide a rotation of the probe along the third rotational axis 203.

Preferably, the first rotational axis 201 is orthogonal to the second one 202, and the third rotational axis 203 is orthogonal to the second one 202. The third axis 203 is provided by the probe support 250.

The first and the second rotational joint 210, 220, 230, 240 can be indexable axes.

The first and the second rotational joint 210, 220, 230, 240 can be passive or motorized. The rotating joint 200 can be provided by one or more actuators or by a mechanism actuated by one or more actuators of the CMM 1 for providing a rotation of the probe 300 around the first and/or the second rotational axis 201, 202.

The probe support 250 of the described exemplary embodiment is an indexable, passive probe support, as illustrated in Figs. 2-5.

The probe support 250 is configured to maintain a discrete and repeatable rotational position of the rotating member 270 with respect to the stationary member 260 by means of a latching mechanism.

The latching mechanism 255, 262, 272 of the probe support 250 is configured to provide a rotational disengagement of the rotating member 270 from the stationary member 260 by an axial displacement of the rotating member 270 from a locked position to a disengagement position along a disengagement axis 203. The latching mechanism is configured to retain the rotating member 270 in his locked position by means of a predefined engagement force.

Advantageously, the disengagement axis of the probe support 250 is coaxial or parallel to the third (rotational) axis 203 provided by the multi-axis rotating joint 200 (i.e. coaxial or parallel to the rotational axis 203 provided by the probe support 250).

Preferably, the latching mechanism is configured to provide a disengagement by an axial displacement of the rotating member 270 that can be obtained, with the CMM, by moving the rotating member 270 (and the attached probe) towards a surface (e.g. of a dedicated accessory) along the disengagement axis 203 and applying an axial force greater than the engagement force.

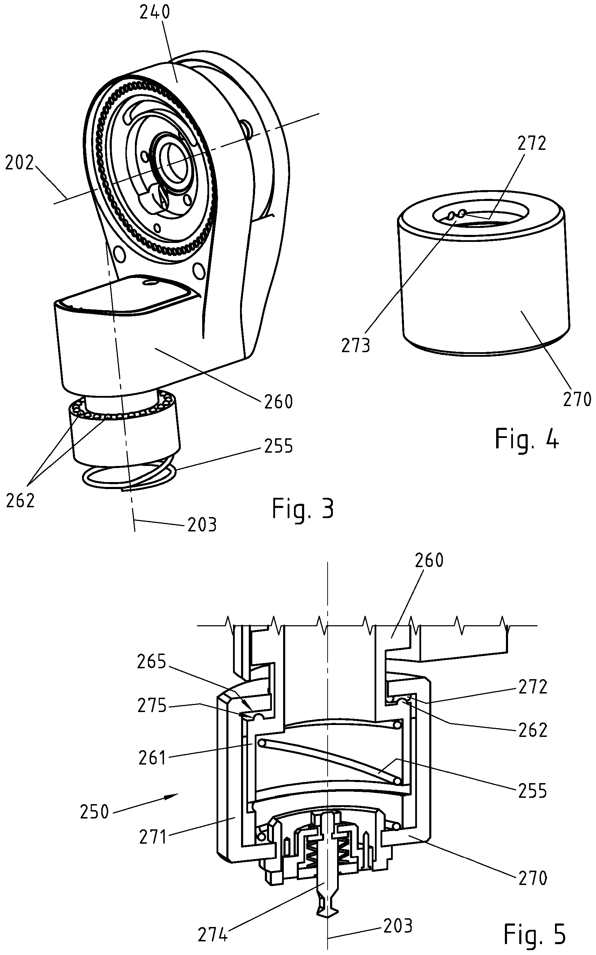

Such a disengagement of the rotating member 270 can be advantageously provided by connecting the rotating member 270 with the stationary member 260 by means of a sliding pivot joint. The sliding pivot, as illustrated in fig. 4, provides a relative rotation and translation around/along the same axis 203, i.e. the disengagement axis coincides with the rotational axis 203 provided by the probe support 250 (i.e. the third rotational axis).

In the embodiment of Figs. 3-5, the sliding pivot joint is enabled by an inner portion 261 of the stationary member 260 that is surrounded by an outer portion 271 of the rotating member 270. The inner portion 261 comprises a cylindrical-shaped external surface cooperating in rotation and in translation with a cylindrical-shaped internal surface of the outer portion 271. The outer portion 271 can thus rotate as well as slide vertically against the inner portion 261.

A radially extending surface 265 of the inner portion 261 is provided with latching elements (e.g. a ring of balls 262) and pressed against a radially extending surface 273 of the outer portion 271 provided with cooperating latching elements 272, 275 (e.g. indexing pins 272 and recesses 275). The rotational member is pushed in the locked position by means of a spring, notably by means of an helicoidal spring 255, of spring constant $k_1$.

In the illustrated embodiment, the latching elements comprises a ring of balls 262 and a plurality of pairs of indexing pins 272 forming cavities 275, each cavity being arranged to receive a protuberant portion of one of the balls of the ring to prevent a rotation of the rotating element when in locked position, while providing repeatable, discrete angular positions.

Applying an initial force exceeding the engagement force (e.g. spring 255 of constant $k_1$) on a portion of the rotating member 270 and/or on a connected probe along the disengagement axis 203 leads to a translation movement of the rotating member 270 from the locked position. This translation causes a disengagement of the latching mechanism by removing the balls of the ring from the respective recesses 275.

Once the latching mechanism is disengaged, the rotating member 270 can be freely rotated around the rotational axis 203 of the probe support 260 by a desired angle Φ, in response of an external force.

Once the desired angular position is reached, preferably corresponding to one of the indexed positions provided by the latching mechanism 262, 272, 275, the initial force is suppressed to let the rotational member return to the rest position which is maintained by a spring 255.

The probe support 250 can comprise one or more electrical and optical signal connectors and connection (preferably provided with optical and electrical slip ring that allows unlimited rotation) for powering the probe 300 and/or transmitting signals between the attached probe 300 and the position determining apparatus 1.

The illustrated probe support 250 further comprises the connector 274 for providing an attachment of one of a plurality (e.g. set) of interchangeable (touch and/or optical) probes.

Notably in case the probe support consists or is part of a standalone probe support or a probe support module, electrical and/or optical connections can be provided on both the stationary and rotating member 260, 270 to provide powering the probe from the positioning determining apparatus and transmission signals between the probe and the apparatus.

In the exemplary embodiment, the position determining apparatus 1 is configured to provide a precise position and orientation of the probe 300 with respect to a reference surface 20 notably within a measure space (i.e. a given relative volume where a coordinate and/or a measure can be provided) and according to a 3D coordinates system XYZ. The reference surface 20 is provided, for example, by a rectified plane 2 on which the workpieces 500 to be measured is placed.

The precise position and orientation of the attached probe is performed:

- by means of one or more actuators and encoders of the apparatus 1 and/or the rotating joint 200 providing a given positioning and orientation of the stationary member 260 of the probe support 250, and
- by providing a relative angular positioning of the rotating member 270 of the probe support 250.

According to the invention, a desired angular positioning of the rotating member 270 of the probe support 250 is provided by means of an accessory 100 for rotating a probe support. The apparatus is advantageously mounted in a fixed position in the measure space of the position determining apparatus (e.g. CMM) 1, e.g. on the reference surface 20.

Alternatively or complementarily, the accessory can be fixed on and/or be part of the position determining apparatus 1 (notably of a stationary or moveable portion thereof), so as to be in a known and/or fixed (e.g. immutable) position with respect to the measure space of the position determining apparatus 1.

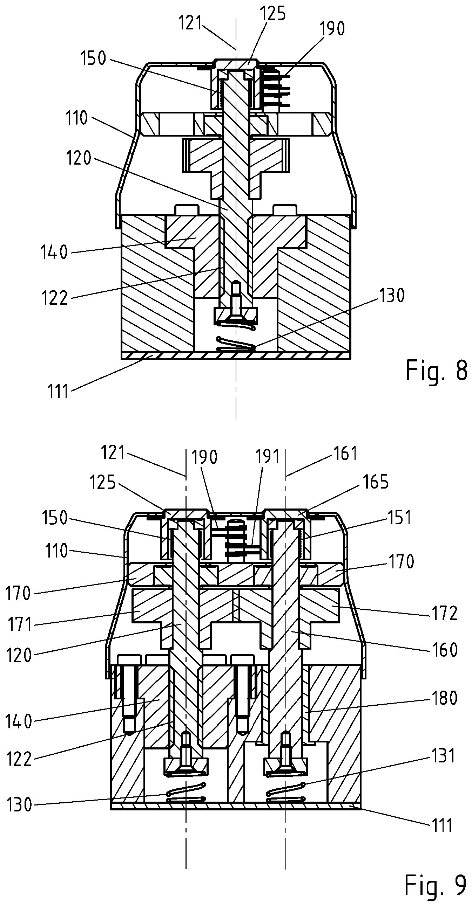

In illustrated embodiment of Figures 1, and 6-10, the accessory takes the form of a rotary station accessory 100 being installed within the working volume (measure space) of the CMM and which mechanically actuates the rotation of the attached probe 300 by a predetermined angle. The rotary station accessory does not require electrical power as the actuation is purely mechanical.

The accessory 100 comprises:

- a body consisting of a fixed part 111 and a moveable part 110;
- a receiving portion 125 movably coupled with the body and configured to receive and engage with (a portion of) the second member 270 of the probe support 250 and/or with (a portion of) the probe 300 attached to the probe support; and
- a mechanical transmission 120, 122, 140 configured to transform a relative translating motion of the receiving portion 125 into a relative rotation of the receiving portion 125 with respect to the body 110.

Advantageously, the mechanical transmission 120, 122, 140 is configured to transform a translating motion of the first receiving portion 125 along a first axis 121 into a rotation of the first receiving portion 125 around the same first axis or around another axis being parallel to said first axis 121. These configurations provide a rotation of a probe support mounted on a position determining apparatus by aligning the rotational axis of the probe support with the rotational axis of the first receiving portion while axially actuating the first receiving portion.

According to the invention, a translation and a rotation along a same axis means that one of the rotational axis and the translation axis is either coaxial or incident (i.e. meeting together) with an angle of less than 45° (preferably less than 5°) with respect to the other of the rotational axis and the translation axis.

According to the invention, a translation and a rotation along parallel axes means that the axes have a same direction with a tolerance of less than 45° (preferably less than 5°) while the axes never meet together.

The receiving portion 125 is advantageously configured to toolless receive and engage with (a portion of) the second member 270 of the probe support 250 and/or with (a portion of) the probe 300 attached to the probe support, i.e. to provide a reception and an engagement without using and/or requiring tools, notably without using and/or requiring screwing, unscrewing, inserting and/or removing tools such as screwdriver, wrench and/or spanner.

The receiving portion 125 is also advantageously configured to provide a toolless retreating of the received and engaged (portion of the) second member 270 and/or probe 300, i.e. a retreating without using and/or requiring tools, notably without using and/or requiring screwing, unscrewing, inserting and/or removing tools such as screwdriver, wrench and/or spanner.

The fixed part 111 of the body permits to fix the position of the apparatus in the measure space of the position determining apparatus (e.g. CMM) 1 and/or on a portion of the position determining apparatus 1. The fixed part can be configured to provide a placement and/or a fixing of the apparatus on a surface in the measure space of the CMM 1, notably on the reference surface 20. The fixed part can comprise a base, a stand, and/or a pedestal for placing the apparatus on a surface. The fixed part can comprise fixing means for fixing the apparatus to a surface in the measure space of the CMM 1.

Alternatively or complementarily, the fixed part 111 can be configured to provide a fixation of the accessory to a stationary portion of the position determining apparatus (so as to provide a fix positioning of the accessory in the measure space of the position determining apparatus) or to a moveable portion of the position determining apparatus.

Advantageously, the receiving portion 125 can be configured to receive and engage with a given interface element of the probe support or of the attached probe, to avoid potential degradation of the probe support or of the probe in following of an interaction and/or a contact with the receiving portion 120. For example, the receiving portion can comprise radially extending and/or converging protuberances (e.g. teeth, or cogs) for providing the rotation provided by the accessory to the probe support or of the attached probe.

Preferably, the mechanical transmission is configured to transform a translating motion of the receiving portion 125 along a given axis 121 into a rotation of the receiving portion 125, preferably by a given angle $\Phi$.

In the illustrated embodiment, the mechanical transmission comprises a spindle 120 that is coupled to the receiving portion by means of a mechanical coupling. The mechanical coupling provides:

- a transfer of the translating motion of the receiving portion 125 to the spindle 120 preferably according to the same axis 121; and
- a transfer of a rotation of the spindle 120 preferably according to the same axis 121 to the receiving portion 125.

In the illustrated embodiment, the mechanical coupling is provided by a cap-shaped portion of the receiving portion radially enveloping a circular extremity of the spindle 120 along the same axis 121. The transfer of the translating motion of the receiving portion 125 is provided by the axial physical contact between the cap-shaped portion of the receiving portion and the circular extremity of the spindle 120, while the transfer of the rotation of the spindle 120 to the receiving portion 125 is provided by a friction provided by the physical contact between these elements around the same axis 120.

The angle $\Phi$ can be a predefined, constant angle $\Phi$ provided by the receiving portion 125 when moving (the receiving portion 125 and the spindle 120) from a rest position to at least (i.e. up to or exceeding) a threshold position with respect to the body (the fixed part thereof) 111. The constant angle $\Phi$ is preferably selected within a range from 5° up to 30°. The vertical stroke required to generate the predefined rotation is preferably selected within a range from 2 mm to 10 mm.

Alternatively, the angle $\Phi$ is a variable angle being function of, e.g. proportional to, the (amount of the) displacement of the receiving portion 125 from the rest position with respect to the body (the fixed part thereof) 111. The variable angle can be provided by a thread portion of the spindle 120 cooperating with a helicoidally threaded portion of, or statically connected to, the fixed part of the body 111.

The accessory 100 advantageously comprises a retaining mechanism 130 applying a retaining force to the receiving portion 125 and the spindle 120 for retaining and to moving back to the rest position. The retaining force can be selected or defined to be greater than the engagement force of the probe support to be rotated.

Advantageously, the accessory can thus comprise a force adjusting mechanism and a selecting element permitting a user to act on the force adjusting mechanism to select the desired retaining force.

A spring, i.e. an elastic object storing mechanical energy, such as a coil spring, with or without a pre-stressing mechanism (mechanically controlled by the force adjusting mechanism) can provide such retaining force while maintaining the actuation provided by the accessory purely mechanical.

The accessory 100 (notably the mechanical transmission) advantageously comprises a receiving portion 125 which is coupled to the spindle 120 by means of an angular retaining mechanism 150 configured such that the rotation of the spindle 120 is transmitted to the receiving portion 125 while they both move down. During the return movement as both the receiving portion 125 and the spindle move up, the rotation of the spindle is un-coupled so that the receiving portion does not rotate and returns to the rest position maintaining the angle $\Phi$ provided by the mechanical transmission. The decoupling can thus be provided by a retaining spring 150, i.e. a mechanism allowing rotary motion in only one direction while preventing motion in the opposite direction. Alternatively, a ratchet mechanism can be used to allow rotation in one direction only. An external spring 190 presses against the receiving portion 125 to apply additional friction to prevent the rotation of the receiving portion 125 during the upward movement. Alternatively to the external spring 190, a joint providing friction or a freewheel mechanism with spring-loaded steel roller can be used for prevent the rotation of the receiving portion 125 during the upward movement.

In the illustrated embodiments, the accessory 100 comprises a body with a fixed base 111 and a cylindrical cover 110 which can move (in translation and/or in rotation) relative to the base 111. The accessory 100 further comprises a receiving portion 125 which is in sliding contact with a central spindle 120 such that the receiving portion, the spindle and the cylindrical cover 110 can move together relative to the body's fixed base 111. A spring 130 provides the retaining force to maintain the receiving portion 125, the spindle 120 and the cylindrical cover 110 in their rest position.

The retaining force provided by this spring is (significantly) greater the engagement force of the probe support, i.e. the spring constant $k_2$ of the spring 130 is significantly greater the spring constant $k_1$ of the spring pushing the rotational member of the probe support in the locked position.

The lower part of the spindle 120 comprises a screwed portion 122 which cooperates with protuberances statically connected to the body's fixed part 111 to provide a rotation of the spindle while it moves down and up. In this embodiment, the screwed portion 122 is a clockwise helicoidal screwed portion and the protuberances are helicoidal protuberances of a nut 140 fastened to the body's fixed part 111.

When the spindle 120 is pressed downwards (against the spring $k_2$) it rotates clockwise by an angle $\Phi$ which is proportional to the (vertical) displacement y of the spindle 120, e.g.:

$$\Phi = f(\theta) \cdot y$$

wherein θ is the helix angle of the screwed portion 122 and/or of the protuberances.

The helix angle and the length of the shaft can be selected to provide the desired rotation angles that are consistent with the indexing angles of the probe support. For example, a displacement of the shaft by 5 mm can rotate it by 15° and a 10 mm displacement produces a rotation of 30°. Larger angles of rotation, in multiples of 15° or 30°, can be obtained by releasing the shaft and repeating the procedure as many times as required.

The accessory 100 can be configured to provide other angle-displacement relationships. The above-described spindle 120 and helicoidal nut 140 can be thus replaced by another pair with a steeper or a shallower helix angle to generate smaller or greater rotations Φ respectively for a predetermined vertical stroke. The helix angle must be sufficiently steep to make the movement reversible.

When the force on the receiving portion 125 is released, the receiving portion 125 and the spindle 120 move upwards relative to the body's fixed part 111 (e.g. base 111). The spindle 120 rotates counterclockwise during this motion however its rotation is not transmitted to the receiving part 125 thanks to the spring 150 which is wound around its upper part and anchored to the receiving portion 125 to act as an angular retaining mechanism. In this embodiment, the spring 150 which is wound tightly clockwise around the spindle allows the spindle and the receiving portion to rotate together clockwise but not counterclockwise which loosens the spring. The external spring 190, fixed to a connecting plate 170 being rotationally immobile with respect to the body's fixed part 111, further blocks the counterclockwise rotation of the receiving portion 125 which could be induced by residual forces from the loosened spring 150.

Alternatively, a ratchet mechanism can be used, such as ratchet mechanisms based on a round gear with teeth being rotationally controlled by a spring-loaded finger.

The accessory 100 provides thus a rotation of the probe support 250 by a given angle without requiring a disconnection of the probe from its support for providing a new orientation. The accessory avoids thus a loss of time for disconnecting and reconnecting the probe during the measurements, while further avoiding recalibration of the probe if precise positioning is required. Moreover, this solution provides a rotation of a probe support, in a semi- or fully-automated fashion.

In a further embodiment which is not illustrated, the accessory 100 can be used to rotate a multi-axis non-motorized probe support. A 2-axis probe support, such as 200 shown in Fig. 2, can be rotated around the axis 201 or 202 if it is equipped with an indexation mechanism similar to the one described for the support 250 and a means of engaging with the receiving portion 125 of the accessory 100.

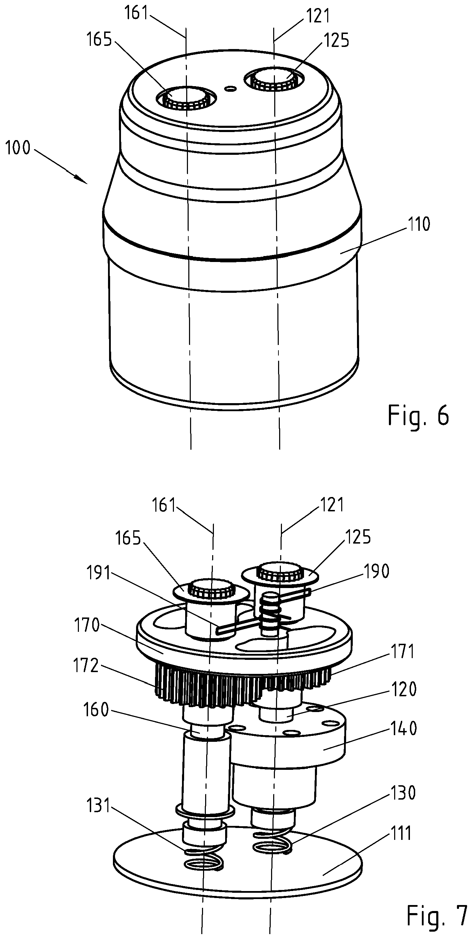

In the embodiment illustrated in Figs. 6, 7, 9 and 10, the apparatus is advantageously a dual-receiving-portion embodiment. The apparatus comprises a second, distinct receiving portion 165 configured to receive and engage with the second member 270 of the rotary probe support 250 and/or with the supported probe 300. The mechanical transmission is further configured to transform a translating motion of the second receiving portion into a rotation of the second receiving portion in an opposite direction of rotation with respect to the direction provided by the other receiving portion 125 (thereafter referenced as the first receiving portion).

Advantageously, the mechanical transmission 120, 122, 140 is configured to transform a translating motion of the second receiving portion 165 along a (second) axis 161 into a rotation of the second receiving portion 165 around the same second axis or around another axis being parallel to said second axis 161.

The second receiving portion 165 is advantageously configured to toolless receive and engage with (a portion of) the second member 270 of the probe support 250 and/or with (a portion of) the probe 300 attached to the probe support. The receiving portion 125 is also advantageously configured to provide a toolless retreating of the received and engaged (portion of the) second member 270 and/or probe 300.

Advantageously, the second receiving portion 165 is configured to receive and engage with the same portion of the second member 270 and/or of the probe as the first receiving portion 125.

More advantageously, the second receiving portion 165 is configured to receive and engage with the (same) given interface element of the probe support or of the attached probe, to avoid potential degradation of the probe support or of the probe.

In Figs. 6-9, the mechanical transmission can thus be configured to transform a translating motion of the second receiving portion 165 along a second axis 161 into a rotation of the receiving portion 165 around the same second axis 161 by means of a second spindle 160. The same second axis 161 is preferably parallel to the axis 121 of the first receiving portion 125 (thereafter referenced as the first the axis). The second spindle 160 is translatable and (preferably unidirectional) rotatable coupled to the second receiving portion 125 with respect to second axis 161.

In the illustrated embodiment, the first and the second spindles 120, 160 are inter-connected, notably by a connecting plate 170, such that they are displaced vertically together. Only one of them is provided with the above described screwed portion 122 while the other is radially retained by a bearing 180. This arrangement provides thus a transmission of the rotation from one spindle to the other by means of a coupling mechanism (e.g. gears 171, 172) assuring a rotation in the opposite direction, while the translation is transmitted from one to the other spindle by the connecting plate 170. This embodiment provides a less costly solution than one with two separate helicoidal shafts.

This dual-receiving-portion embodiment permits to reduce the time required to rotate the rotary support by a given angle as the accessory can selectively provide clockwise and anticlockwise rotations. Depending on the direction of rotation that is desired, the rotary support and/or the probe can be positioned above either the first or the second receiving portions and presses down to actuate the rotation by a desired angle according to the selected direction of rotation. By way of example, an accessory 100 with a single rotary mechanism for a clockwise rotation of 15° would require 23 repetitions to generate a counterclockwise rotation by 15°.

The accessory 100 can thus be used to rotate the probe support being part of or integrated in a single-axis or multiple-axis rotating joint. In particular, the accessory 100 can be used in this manner to rotate the probe support being part of or integrated in a 2-axis probe head with orthogonal axes.

Advantageously, the accessory 100 can be provided in a metrological set, i.e. in combination with the probe support 250, notably with a single axis, a two-axis or multi-axis rotating joint 200 (e.g. probe head) comprising the probe support 250.

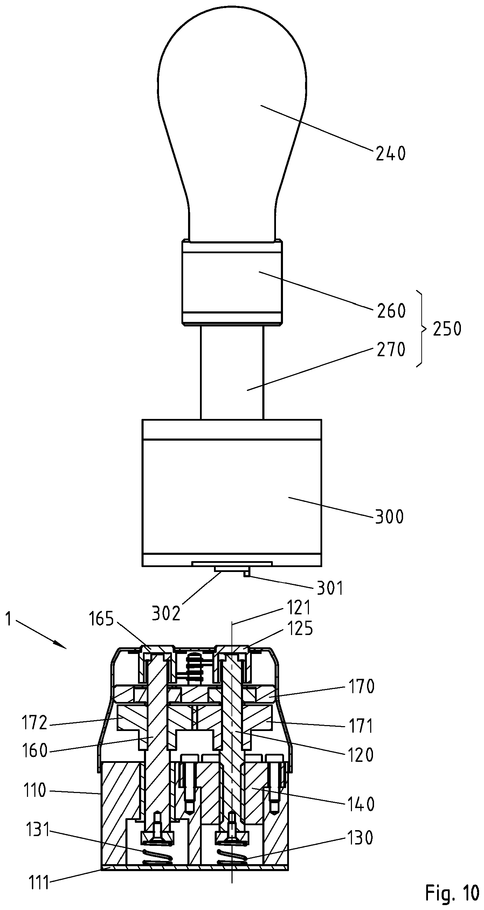

This set provides an effective coupling between the first or the second receiving portion by providing the probe support or the probe with an adequate interface element 301, as illustrated in Figure 10.

In the illustrated embodiment, the interface element comprises a disc 302 on the axis of rotation of the probe 300 and a protuberant cylindrical element 301 on its periphery which is designed to couple with one of the indentations of the toothed perimeter of the receiving portion 125. The disc 302 serves to press downwards on the receiving portion 125 such that the cylindrical cover 110, the spindle 120 and the receiving portion 125 move downwards. The rotation provided by this motion is transmitted to the probe support through the element 301 engaged in one of the radially extending teeth of the receiving portion (cogwheel).

Moreover, the set can comprise a second accessory (e.g. rotary station). This set permits thus to place the first and the second accessory in distinct positions and orientations with respect to the reference plane. For example, one rotary station can be placed vertically to actuate the rotation around a first axis and a second rotation station placed with its shafts horizontal to actuate a rotation around the second axis.

According to the invention, the probe support, once mounted on a position determining apparatus 1 and preferably supporting a probe 300, can thus be oriented or re-oriented by means of the described accessory, according to followings steps:

- driving, with the position determining apparatus 1, the position determining apparatus 1 to engage (a portion of) the second member 270 and/or the probe 300 in the first or second receiving portion 125, 165 of the accessory 100;
- moving, with the position determining apparatus 1, the second member 260 and/or the probe 300 so as to relatively translate the first or second receiving portion 125, 165 with respect to the body (notably with respect to the fixed part, e.g. base, thereof) 111 of the accessory 100;
- retreating the second member 270 and/or the probe 300 from the first or second receiving portion 125, 165.

In particular, the step of moving the second member and/or the probe comprises moving (the second member or the probe) along the rotation axis of the first or second receiving portion (or along another axis being parallel to this rotation axis), so as to provide a rotation of the second member.

Advantageously, the steps of engaging and of retreating (a portion of) the second member 270 and/or the probe 300 in/from the first or second receiving portion 125, 165 are operated without tools.

The method can also comprise an initial step of selecting between the first and the second receiving portion, in case of a use of a dual-receiving portion rotary station.

The step of driving the second member 270 and/or the probe 300 can comprise a step of bringing the second member 270 and/or the probe 300 (notably the interface element 302 thereof) in alignment with the first or second axis 121, 161 of the accessory 100.

The step of moving the second member 260 and/or the probe 300 can thus comprise a step of moving the second member 260 and/or the probe 300 (notably the interface element 302 thereof) along the first or second axis 121, 161, notably by a predetermined stroke greater than the retaining force of the accessory 100. The second member 260 and/or the probe 300 can be moved to translate the first or the second receiving portion from its rest position to a given relative position, so as to rotate the probe support by a desired angle.

The method can also comprise a step of moving back the second member 260 and/or the probe 300 (notably the interface element 302 thereof) to translate the first or the second receiving portion 125, 165 back to the rest position. The second member 260 and/or the probe 300 can thus be moved back along the same first or second axis 121, 161, notably by applying a stroke weaker than the retaining force of the accessory 100 (e.g. by reducing the predetermined stroke below the retaining force).

The step of moving the second member 260 and/or the probe 300 for actuating the first or second receiving portion 125, 165 can thus be repeated to further rotate the probe support by an additional angle.

Figure 10 shows an alignment of the probe support 250 with the station (i.e. the accessory) 100 for providing a rotation of the probe support. The stationary member 260 of the probe support is connected to a CMM (not illustrated) and the rotating member 270 supports the probe 300 being a line optical probe 300.

At first, the CMM positions the probe 300 vertically above the station 100 that is unmovably located in the measure space of the CMM. The CMM positions the interface element 302 of the probe 300 above the selected receiving portion of the station.

The CMM presses then the probe 300 against the station by a vertical displacement of preset amount and by a predefined force greater than both the engagement force of the probe support 250 and the retaining force of the station 100.

The spring 255 of the latching mechanism of the probe support is thus compressed, releasing the rotating member 270 from the stationary member 260.

With further displacement the spring 130 of the station is compressed and the spindle 120 and the first receiving portion 125 start to rotate the probe 300 by a desired angle. The preset amount of the displacement is selected or determined to provide the desired angle, that is based on (e.g. proportional to or function of) the downwards displacement of the selected shaft.

The CMM stops the movement of the probe 300 after the preset displacement has been reached.

The CMM then moves the probe up vertically, allowing the spindle to move up to its rest position and (in the last stages) releasing the spring 255 of the latching mechanism of probe support so that the probe support is locked in the nearest indexed position.

If a bigger angle of rotation is desired, the above procedure can be repeated to rotate once again by the same or another desired angle.

List of reference numerals

| | |
|---|---|
| 1 | Positioning determining apparatus |
| 2 | Reference plane |
| 3 | Moveable platform |
| 20 | Reference surface |
| 100 | Accessory/rotating station |
| 110 | Cover |
| 111 | Base |
| 120 | 1st spindle |
| 121 | Translating and rotational axis |
| 122 | Screwed portion |
| 125 | 1st receiving portion |
| 130, 131 | Spring |
| 150, 151 | Retaining spring |
| 161 | Translating and rotational axis |
| 160 | 2nd spindle |
| 165 | 2nd receiving portion |
| 170 | Coupling plate |
| 171,172 | Coupling gear |
| 180 | Bearing |
| 190, 191 | Friction spring |
| 200 | Multi-axis rotating joint |
| 201 | Rotational axis |
| 202 | Rotational axis |
| 203 | Rotational axis |
| 210 | Stationary member of the first joint/connection |
| 220 | Rotating member of the first joint/connection |
| 230 | Stationary member of the second joint/connection |
| 240 | Rotating member of the second joint/connection |
| 250 | Probe support |
| 255 | Spring |
| 260 | Stationary member |
| 261 | Cylindrical portion |
| 262 | Indexing Ball |
| 265 | Latching surface |
| 270 | Rotating member |
| 271 | Cylindrical portion |
| 272 | Indexing pin |
| 273 | Latching surface |
| 274 | Connector |
| 275 | Recess |
| 300 | Optical line sensor |
| 301 | Protruding element |
| 302 | Disc |
| 500 | Workpiece |

**Claims**

1. An accessory (100) for rotating a probe support (250), the probe support (250) comprising a first member (260) mounted on a position determining apparatus (1) and a second member (270) rotatably coupled with the first member (260) and configured to support a probe, the accessory (100) including

   a body (110,111);
   a first receiving portion (125) configured to receive and engage with a portion of the second member (270) or with a probe (300) supported by said second member (270);
   a mechanical transmission (120, 122, 140,) configured to transform a relative translating motion of the first receiving portion (125) into a relative rotation of the first receiving portion (125) with respect to the body (111);
   wherein the mechanical transmission (120, 122, 140) is configured to transform a translating motion of the first receiving portion (125) along a first axis (121) into a rotation of the first receiving portion (125) around the same first axis (121) or around another axis being parallel to said first axis (121) to rotate the second member (270) with respect to the first member (260) of the probe support (250) when the first receiving portion (125) of the accessory (100) is engaged with said portion of the second member (270) or with the probe (300) and the second member (270) or the probe (300) is moved by the position determining apparatus (1) along the same first axis (121) or along said another axis, by a predetermined stroke.

2. The accessory according to claim 1, comprising a mechanism (130) applying a retaining force for:

   retaining the first receiving portion (125) in a rest position with respect to the body (111), and/or moving the first receiving portion back to the rest position;

   preferably said mechanism comprising a spring, notably a coil spring (130), for providing said retaining force between the first receiving portion (125) and the body 111.

3. The accessory according to claim 2, wherein the mechanical transmission is configured to rotate the first receiving portion (125) by a constant angle in response of a translation of the first receiving portion (125) from said rest position to a threshold position with respect to the body (111), preferably said constant angle being within a range from 5° up to 30°.

4. The accessory according to claim 2, wherein the mechanical transmission (120, 122, 140) is configured to rotate the first receiving portion (125) by a variable angle being proportional to and/or a function of a relative displacement of the first receiving portion (125) from the rest position.

5. The accessory according to claim 4, the first receiving portion comprising a helical thread portion (122) cooperating with at least a protuberance statically connected to the body (111).

6. The accessory according to any one of claims 1 to 5, further comprising a retaining mechanism (150) allowing a rotary motion of the first receiving portion (125) in only one direction of rotation.

7. The accessory to any one of claims 1 to 6, further comprising a second receiving portion (165) configured to receive and engage with a portion of the second member of the probe support and/or the probe (300);
   wherein the mechanical transmission (120, 122, 140, 170, 160, 171, 172) is configured to transform a translating motion of the second receiving portion (165) into a rotation of the second receiving portion (165) in an opposite direction of rotation with respect to rotation provided by the first receiving portion (125).

8. The accessory according to claim 7, wherein the mechanical transmission is configured to transform a translating motion of the receiving portion along a second axis (161) into a rotation of the receiving portion around the same second axis (161); preferably the second axis (161) being parallel to the first axis (121).

9. The accessory according to any one of claims 1 to 8, the receiving portion (125) being configured to:

   toolless receive and engage with said portion of said second member (270) and/or said probe (300), and to
   provide a toolless retreating of the received and engaged portion of said second member (270) and/or of said probe (300).

10. The accessory according to any one of claims 1 to 9, the accessory being an external accessory with respect to the probe support (250) and the probe (300).

11. A metrological set comprising:

    a probe support (250) comprising a first member (260) being mounted or mountable on a position determining apparatus (1) and a second member (270) rotatably coupled with the first member (260) and configured to support a probe; and
    an accessory according to any one of claims 1 to 10 for rotating said probe support (250);
    wherein said second member (270) or a probe (300) attached to said second member (270) includes an interface element (301, 302) configured to interact with the first and/or second receiving portion (125, 165) of said accessory (100).

12. The metrological set according to claim 11, further comprising a single-axis, a two-axis or a multi-axis rotating joint, preferably being a probe head;
    wherein the rotating joint (200) comprises the probe support (250).

13. The metrological set according to claim 11 or 12, wherein the probe support (250) is configured to rotatably disengage the second member (270) from the first member (260) in response to a relative translation of the second member (270) with respect to the first member (260), preferably against an engaging force retaining the second member (270) in a locked position with respect to the first member (260).

14. The metrological set according to any one of claims 11 to 13, wherein the probe support is a passive and/or indexable probe support (250).

15. A method of re-orienting a rotary probe support (250) comprising a first member (260) being mounted on a position determining apparatus (1) and a second member (270) rotatably coupled with the first member (260) and configured to support a probe, the method including:

- driving the position determining apparatus (1) to bring an interface element (302) of the second member (270) or of a probe (300) supported by the second member in alignment with an axis (121) of an accessory (100) according to any one of claims 1 to 10;
- moving the second member (270) or the probe (300) with the position determining apparatus (1) along the axis (121) so as to engage the receiving portion of the accessory (100);
- moving the second member (270) or the probe (300) with the position determining apparatus (1) along the same axis (121) or along another axis being parallel to said axis (121), by a predetermined stroke so as to provide a rotation of the second member (270) with respect to the first member (260) ;
- retreating the second member (270) or the probe (300).

**Patentansprüche**

1. Ein Zubehör (100) zum Drehen einer Sondenhalterung (250), wobei die Sondenhalterung (250) ein erstes Element (260), das an einer Positionsbestimmungsvorrichtung (1) angebracht ist aufweist, und ein zweites Element (270), das drehbar mit dem ersten Element (260) gekoppelt ist und derart konfiguriert ist, dass es eine Sonde trägt, aufweist, wobei das Zubehör (100) Folgendes umfasst

- einen Körper (110, 111);

   - einen ersten Aufnahmeabschnitt (125), der so konfiguriert ist, dass er einen Abschnitt des zweiten Elements (270) oder eine von dem zweiten Element (270) getragene Sonde (300) aufnimmt und damit in Eingriff kommt,
   - ein mechanisches Getriebe (120, 122, 140), das so konfiguriert ist, dass es eine relative Translationsbewegung des ersten Aufnahmeabschnitts (125) in eine relative Drehung des ersten Aufnahmeabschnitts (125) in Bezug auf den Körper (111) umwandelt;

wobei das mechanische Getriebe (120, 122, 140) konfiguriert ist, um eine Translationsbewegung des ersten Aufnahmeabschnitts (125) entlang einer ersten Achse (121) in eine Drehung des ersten Aufnahmeabschnitts (125) um dieselbe erste Achse (121) oder um eine andere Achse, die parallel zu der ersten Achse (121) ist, umzuwandeln, um das zweite Element (270) in Bezug auf das erste Element (260) der Sondenhalterung (250) zu drehen (260), wenn der erste Aufnahmeabschnitt (125) des Zubehörs (100) mit dem Abschnitt des zweiten Elements (270) oder mit der Sonde (300) in Eingriff ist und das zweite Element (270) oder die Sonde (300) von der Positionsbestimmungsvorrichtung (1) entlang derselben ersten Achse (121) oder entlang der anderen Achse bewegt wird, um einen vorbestimmten Hub bewegt wird.

2. Das Zubehörteil nach Anspruch 1, umfassend einen Mechanismus (130), der eine Haltekraft aufbringt, um:

   - ein Halten des ersten Aufnahmeabschnitts (125) in der Ruheposition in Bezug auf den Körper (111), und/oder
   - ein Bewegen des ersten Aufnahmeabschnitts zurück in die Ruheposition;
   zu bewirken,
   wobei der Mechanismus vorzugsweise eine Feder, insbesondere eine Schraubenfeder (130), umfasst, um die Haltekraft zwischen dem ersten Aufnahmeabschnitt (125) und dem Körper (111) bereitzustellen.

3. Das Zubehörteil nach Anspruch 2, wobei das mechanische Getriebe so konfiguriert ist, dass es den ersten Aufnahmeabschnitt (125) in Reaktion auf eine Verschiebung des ersten Aufnahmeabschnitts (125) aus der Ruheposition in eine Schwellenposition in Bezug auf den Körper (111) um einen konstanten Winkel dreht, wobei der konstante Winkel vorzugsweise in einem Bereich von 5° bis 30° liegt.

4. Das Zubehörteil nach Anspruch 2, wobei das mechanische Getriebe (120, 122, 140) so konfiguriert ist, dass es den ersten Aufnahmeabschnitt (125) um einen variablen Winkel dreht, wobei der variable Winkel proportional zu und/oder in Abhängigkeit von einer relativen Verschiebung des ersten Aufnahmeabschnitts (125) aus der Ruheposition ist.

5. Das Zubehörteil nach Anspruch 4, wobei der erste Aufnahmeabschnitt einen schraubenförmigen Gewindeabschnitt (122) umfasst, der mit mindestens einer statisch mit dem Körper (111) verbundenen Ausstülpung zusammenwirkt.

6. Das Zubehörteil nach einem der Ansprüche 1 bis 5, weiters aufweisend einen Haltemechanismus (150), der eine Drehbewegung des ersten Aufnahmeabschnitts (125) in nur einer Drehrichtung ermöglicht.

7. Das Zubehör nach einem der Ansprüche 1 bis 6, das ferner einen zweiten Aufnahmeabschnitt (165) umfasst, der so konfiguriert ist, dass er einen Abschnitt des zweiten Elements der Sondenhalterung und/oder der Sonde (300) aufnimmt und damit in Eingriff kommt;

wobei das mechanische Getriebe (120, 122, 140, 170, 160, 171, 172) so konfiguriert ist, dass es eine Translationsbewegung des zweiten Aufnahmeabschnitts (165) in eine Drehung des zweiten Aufnahmeabschnitts (165) in einer entgegengesetzten Drehrichtung in Bezug auf die durch den ersten Aufnahmeabschnitt (125) bereitgestellte Drehung umwandelt.

8. Das Zubehörteil nach Anspruch 7, wobei das mechanische Getriebe so konfiguriert ist, dass es eine Translationsbewegung des Aufnahmeteils entlang einer zweiten Achse (161) in eine Rotation des Aufnahmeteils um dieselbe zweite Achse (161) umwandelt; vorzugsweise ist die zweite Achse (161) parallel zur ersten Achse (121).

9. Das Zubehörteil nach einem der Ansprüche 1 bis 8, wobei der Aufnahmeabschnitt (125) derart konfiguriert ist,

   - den Abschnitt des zweiten Elements (270) und/oder der Sonde (300) werkzeuglos aufzunehmen und darin einzugreifen, und
   - ein werkzeugloses Zurückziehen des aufgenommenen und in Eingriff stehenden Abschnitts des zweiten Elements (270) und/oder der Sonde (300) zu ermöglichen.

10. Das Zubehörteil nach einem der Ansprüche 1 bis 9, wobei das Zubehörteil in Bezug auf den Sondenträger (250) und die Sonde (300) ein externes Zubehörteil ist.

11. Ein messtechnischer Satz, der Folgendes umfasst:

    - eine Sondenhalterung (250) mit einem ersten Element (260), das an einer Positionsbestimmungsvorrichtung (1) angebracht oder anbringbar ist, und einem zweiten Element (270), das drehbar mit dem ersten Element (260) gekoppelt und zum Halten einer Sonde konfiguriert ist; und
    - ein Zubehörteil nach einem der Ansprüche 1 bis 10 zum Drehen der Sondenhalterung (250);
    - wobei das zweite Element (270) oder eine an dem zweiten Element (270) angebrachte Sonde (300) ein Schnittstellenelement (301, 302) aufweist, das so konfiguriert ist, dass es mit dem ersten und/oder zweiten Aufnahmeabschnitt (125, 165) des Zubehörs (100) zusammenwirkt.

12. Der messtechnische Satz nach Anspruch 11, weiters aufweisend ein einachsiges, zweiachsiges oder mehrachsiges Drehgelenk, vorzugsweise einen Sondenkopf;

wobei die Drehverbindung (200) die Sondenhalterung (250) umfasst.

13. Der messtechnische Satz nach Anspruch 11 oder 12, wobei die Sondenhalterung (250) so konfiguriert ist, dass sie das zweite Element (270) in Reaktion auf eine relative Verschiebung des zweiten Elements (270) in Bezug auf das erste (260) drehbar vom ersten Element (260) löst, vorzugsweise gegen eine Eingriffskraft, die das zweite Element (270) in einer verriegelten Position in Bezug auf das erste Element (260) hält.

14. Der messtechnische Satz nach einem der Ansprüche 11 bis 13, wobei der Sondenträger ein passiver und/oder indexierbarer Sondenträger (250) ist.

15. Ein Verfahren zur Neuausrichtung einer drehbaren Sondenhalterung (250), die ein erstes Element (260) aufweist, das an einer Positionsbestimmungsvorrichtung (1) angebracht ist, und ein zweites Element (270) aufweist, das drehbar mit dem ersten Element (260) gekoppelt und so konfiguriert ist, dass es eine Sonde trägt, wobei das Verfahren Folgendes umfasst:

    - Antreiben der Positionsbestimmungsvorrichtung (1), um ein Schnittstellenelement (302) des zweiten Elements (270) oder einer von dem zweiten Element getragenen Sonde (300) in Ausrichtung mit einer Achse (121) eines Zubehörs (100) nach einem der Ansprüche 1 bis 10 zu bringen;
    - Bewegen des zweiten Elements (260) oder der Sonde (300) mit der Positionsbestimmungsvorrichtung (1) entlang der Achse (121), um den Aufnahmeabschnitt des Zubehörs (100) zu erfassen;
    - Bewegen des zweiten Elements (260) oder der Sonde (300) mit der Positionsbestimmungsvorrichtung (1) entlang der gleichen Achse (121) oder entlang einer anderen Achse, die parallel zu der Achse (121) ist, um einen vorbestimmten Hub, um eine Drehung des zweiten Elements (260) zu bewirken;
    - Zurückziehen des zweiten Elements (270) oder der Sonde (300).

**Revendications**

1. Accessoire (100) pour la rotation d'un support de sonde (250), le support de sonde (250) comprenant un premier élément (260) monté sur un appareil de détermination de position (1) et un second élément (270) couplé de manière rotative au premier élément (260) et configuré pour supporter une sonde, l'accessoire (100) comprenant

- un corps (110,111) ;

- une première portion de réception (125) configurée pour recevoir et s'engager avec une portion du deuxième élément (270) ou avec une sonde (300) supportée par ledit deuxième élément (270) ;
- une transmission mécanique (120, 122, 140) configurée pour transformer un mouvement relatif de translation de la première portion de réception (125) en une rotation relative de la première portion de réception (125) par rapport au corps (111);
- dans lequel la transmission mécanique (120, 122, 140) est configurée pour transformer un mouvement de translation de la première portion de réception (125) le long d'un premier axe (121) en une rotation de la première portion de réception (125) autour du même premier axe (121) ou autour d'un autre axe parallèle audit premier axe (121) pour faire tourner le deuxième élément (270) par rapport au premier élément (260) du support de sonde (250) lorsque la première portion de réception (125) de l'accessoire (100) est en prise avec ladite portion du deuxième élément (270) ou avec la sonde (300) et que le deuxième élément (270) ou la sonde (300) est déplacé par l'appareil de détermination de position (1) le long du même premier axe (121) ou le long dudit autre axe, d'une course prédéterminée.

2. L'accessoire selon la revendication 1, comprenant un mécanisme (130) appliquant une force de retenue pour :

- maintenir la première portion de réception (125) en position de repos par rapport au corps (111), et/ou
- ramener la première portion de réception en position de repos ;

de préférence, ledit mécanisme comprend un ressort, notamment un ressort hélicoïdal (130), pour fournir ladite force de retenue entre la première portion de réception (125) et le corps 111.

3. L'accessoire selon la revendication 2, dans lequel la transmission mécanique est configurée pour faire tourner la première portion de réception (125) d'un angle constant en réponse à une translation de la première portion de réception (125) de ladite position de repos à une position seuil par rapport au corps (111), de préférence ledit angle constant étant compris dans une plage allant de 5° à 30°.

4. L'accessoire selon la revendication 2, dans lequel la transmission mécanique (120, 122, 140) est configurée pour faire tourner la première portion de réception (125) d'un angle variable proportionnel et/ou fonction d'un déplacement relatif de la première portion de réception (125) par rapport à la position de repos.

5. L'accessoire selon la revendication 4, la première portion de réception comprenant une portion filetée hélicoïdale (122) coopérant avec au moins une protubérance reliée statiquement au corps (111).

6. L'accessoire selon l'une des revendications 1 à 5, comprenant en outre un mécanisme de retenue (150) permettant un mouvement de rotation de la première portion de réception (125) dans un seul sens de rotation.

7. L'accessoire selon l'une des revendications 1 à 6, comprenant en outre une deuxième portion de réception (165) configurée pour recevoir et s'engager dans une portion du deuxième élément du support de sonde et/ou de la sonde (300) ;
dans lequel la transmission mécanique (120, 122, 140, 170, 160, 171, 172) est configurée pour transformer un mouvement de translation de la deuxième portion de réception (165) en une rotation de la deuxième portion de réception (165) dans un sens de rotation opposé à la rotation fournie par la première portion de réception (125).

8. L'accessoire selon la revendication 7, dans lequel la transmission mécanique est configurée pour transformer un mouvement de translation de la portion de réception le long d'un deuxième axe (161) en une rotation de la portion de réception autour du même deuxième axe (161) ; de préférence, le deuxième axe (161) est parallèle au premier axe (121).

9. L'accessoire selon l'une des revendications 1 à 8, la portion de réception (125) étant configurée pour :

- recevoir et engager sans outillage ladite portion dudit deuxième élément (270) et/ou de ladite sonde (300), et à
- permettre un retrait sans outillage de la portion reçue et engagée dudit deuxième élément (270) et/ou de ladite sonde (300).

10. L'accessoire selon l'une des revendications 1 à 9, l'accessoire étant un accessoire externe par rapport au support de sonde (250) et à la sonde (300).

**11.** Ensemble métrologique comprenant

- un support de sonde (250) comprenant un premier élément (260) monté ou pouvant être monté sur un appareil de détermination de position (1) et un second élément (270) couplé en rotation avec le premier élément (260) et configuré pour supporter une sonde ; et
- un accessoire selon l'une des revendications 1 à 10 pour faire tourner ledit support de sonde (250) ;
- dans lequel ledit deuxième élément (270) ou une sonde (300) attachée audit deuxième élément (270) comprend un élément d'interface (301, 302) configuré pour interagir avec la première et/ou la deuxième portion de réception (125, 165) dudit accessoire (100).

**12.** L'ensemble métrologique selon la revendication 11, comprenant en outre une articulation rotative à un, deux ou plusieurs axes, de préférence une tête de sonde ;

dans lequel le joint rotatif (200) comprend le support de sonde (250).

**13.** Ensemble métrologique selon la revendication 11 ou 12, dans lequel le support de sonde (250) est configuré pour désengager de manière rotative le second élément (270) du premier élément (260) en réponse à une translation relative du second élément (270) par rapport au premier élément (260), de préférence contre une force d'engagement retenant le second élément (270) dans une position verrouillée par rapport au premier élément (260).

**14.** L'ensemble métrologique selon l'une des revendications 11 à 13, dans lequel le support de sonde est un support de sonde passif et/ou indexable (250).

**15.** Un procédé de réorientation d'un support de sonde rotatif (250) comprenant un premier élément (260) monté sur un appareil de détermination de position (1) et un second élément (270) couplé de manière rotative au premier élément (260) et configuré pour supporter une sonde, le procédé comprenant :

- entraîner l'appareil de détermination de position (1) pour amener un élément d'interface (302) du deuxième élément (270) ou d'une sonde (300) supportée par le deuxième élément dans l'alignement d'un axe (121) d'un accessoire (100) selon l'une quelconque des revendications 1 à 10 ;
- déplacer le deuxième élément (260) ou la sonde (300) avec l'appareil de détermination de position (1) le long de l'axe (121) de manière à engager la portion de réception de l'accessoire (100) ;

- déplacer le second élément (260) ou la sonde (300) avec l'appareil de détermination de position (1) le long du même axe (121) ou le long d'un autre axe parallèle audit axe (121), d'une course prédéterminée de manière à assurer une rotation du second élément (260) ;
- retrait du deuxième élément (270) ou de la sonde (300).

Fig. 1

Fig. 2

240

202

262

203

260

255

Fig. 3

272

273

270

Fig. 4

260

265

275

261

250

271

274

203

272

262

255

270

Fig. 5

161 121
165 125
100
110

Fig. 6

161 121
165 125
191 190
170
172 171
160 120
140
131 130
111

Fig. 7

Fig. 8

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2889573 A1
- EP 1610087 A
- EP 2384851 A
- DE 10260670 B4
- WO 2008029094 A
- WO 2009109764 A
- WO 2015155209 A
- US 5101548 A